# EUROPEAN PATENT SPECIFICATION

(11) **EP 0 420 585 B1**
(45) Date of publication and mention of the grant of the patent: **27.07.1994**
(21) Application number: 90310494.1
(22) Date of filing: 25.09.1990
(51) Int. Cl.: C08L 83/04, C08J 3/12

(54) **Heat-curable silicone rubber composition**
Hitzehärtbare Silikon-Kautschuk-Zusammensetzung
Composition de caoutchouc de silicone thermodurcissable

(30) Priority: 28.09.1989 JP 253280/89
(43) Date of publication of application: 03.04.1991
(73) Proprietor: Shin-Etsu Chemical Co., Ltd., Chiyoda-ku Tokyo 100 (JP)
(72) Inventor: Yoshida, Takeo, Annaka-shi, Gunma-ken (JP); Inoue, Yoshio, Annaka-shi, Gunma-ken (JP); Takahashi, Masaharu, Annaka-shi, Gunma-ken (JP)
(74) Representative: Baverstock, Michael George Douglas

(56) References cited:
- EP-A- 0 373 941
- FR-A- 1 464 314
- FR-A- 2 627 773
- US-A- 3 832 420
- PATENT ABSTRACTS OF JAPAN vol. 10, no. 362 (C-389)(2419) December 4, 1986 ; & JP-A-61159448
- PATENT ABSTRACTS OF JAPAN vol. 10, no. 364 (P-524)(2421) December 5, 1986 & JP-A-61158362

## Description

The present invention relates to a heat-curable silicone rubber composition and more particularly, to a heat-curable silicone rubber composition capable of giving a cured silicone rubber having no surface tackiness and a low coefficient of friction along with excellent mechanical properties and recoverability from compression so as to be useful as a material for example, rubber packings in automobiles and rubber rollers in copying machines and resin laminating machines. The invention also relates to a cured silicone rubber article obtained by curing the heat-curable silicone rubber composition.

Heat-curable silicone rubber compositions of a class are prepared from an organopolysiloxane having a linear molecular structure and containing alkenyl groups as a part of the organic groups bonded to the silicon atoms compounded with a finely divided reinforcing silica filler and a curing agent which is an organic peroxide or a combination of an organohydrogenpolysiloxane and a trace amount of a platinum compound as a catalyst. Such a heat-curable silicone rubber composition can be cured by heating to give a cured silicone rubber article having excellent properties such as heat-and cold-resistance, electrical properties, e.g., electrical insulation, and the like to be useful as parts of electric and electronic appliances as well as automobiles, materials in architectural and civil engineering works and medical and food processing tools by virtue of the absence of toxicity. Cured silicone rubbers are used also as a material of rubber rollers in view of the unique surface properties thereof.

It is sometimes desired to obtain a cured silicone rubber article having no surface tackiness and a low coefficient of friction by curing a heat-curable silicone rubber composition. In this regard, a proposal is made in Japanese Patent Kokai 61-159448 according to which a poly(methyl silsesquioxane) in a powdery form is used as a filler of the silicone rubber composition. Rubber rollers for image fixing in a copying machine fabricated by using such a composition are also known (see, for example, Japanese Patent Kokai 61-158362) . Although the heat-curable silicone rubber composition proposed there is advantageous in respect of the absence of surface tackiness and a low coefficient of friction of cured silicone rubber articles made therefrom, there is a problem in that the cured silicone rubber article has disadvantageously low mechanical properties, rubbery resilient elasticity and recoverability from compression.

The present invention was made with an object to provide a novel heat-curable silicone rubber composition free from the above described problems and disadvantages in conventional heat-curable silicone rubber compositions as well as to provide a cured "silicone rubber article prepared from the silicone rubber composition.

The heat-curable silicone rubber composition of the present invention comprises, as a blend:
(a) 100 parts by weight of a diorganopolysiloxane represented by the average unit formula

   RₐSiO_{(4-a)/2}, (I)

   in which R is an unsubstituted or substituted monovalent hydrocarbon group and the subscript a is a positive number in the range from 1.95 to 2.05, and having an average degree of polymerization in the range from 100 to 10,000;
(b) from 1 to 200 parts by weight of a poly(methyl vinyl silsesquioxane) consisting essentially of trifunctional organosiloxane units of which the organic groups bonded to the silicon atoms are methyl and vinyl groups, the weight proportion of the vinyl groups being in the range from 0.1 to 10% based on the total amount of the vinyl and methyl groups therein, in the form of a powder having an average particle diameter in the range from 0.1 to 50 µm; and
(c) a curing agent in an amount sufficient to cure the composition by heating.

As is described above, the most characteristic feature of the heat-curable silicone rubber composition of the invention consists in the use of the unique component (b) as a filler which is a powder of a poly(organosilsesquioxane) containing methyl groups and a specified amount of vinyl groups as the organic groups bonded to the silicon atoms.

The component (a) in the new heat-curable silicone rubber composition is a diorganopolysiloxane having a substantially linear molecular structure which is represented by the average unit formula (I) given above. The symbol R in the formula denotes an unsubstituted or substituted monovalent hydrocarbon group exemplified by alkyl groups, e.g., methyl, ethyl and propyl groups, alkenyl groups, e.g., vinyl, allyl and butenyl groups, and aryl groups, e.g., phenyl and tolyl gtoups, as well as those substituted groups obtained by replacing a part or all of the hydrogen atoms in the above named hydrocarbon groups with substituent atoms and/or groups such as halogen atoms, cyano groups, e.g., chloromethyl, 3,3,3-trifluoropropyl and 2-cyanoethyl groups. Two kinds or more of different hydrocarbon groups can be contained in a molecule of the diorganopolysiloxane. The subscript a in the formula (I) is a positive number in the range from 1.95 to 2.05 so that the diorganopolysiloxane, which desirably has a straight linear molecular structure, may have some branches without particular adverse effects. The diorganopolysiloxane as the component (a) has an average degree of polymerization in the range from 100 to 10,000 so that the diorganopolysiloxane may have a flowable to gum-like consistency. When the average degree of polymerization is too small, the silicone rubber composition cannot give a cured silicone rubber article having sufficiently high mechanical strength. When the average degree of polymerization is too large, on the other hand, difficulties are encountered in compounding the components to prepare a composition, and also a decrease in the moldability of the composition. The groups terminating the molecular chain ends of the diorganopolysiloxane are not particularly limitative, including tri(hydrocarbyl) groups, silanolic hydroxy group, silicon-bonded alkoxy groups.

The component (b) in the inventive composition is a filler which is a powder of a poly(methyl vinyl silsesquioxane). Specifically, it is an organopolysiloxane essentially consisting of trifunctional organosiloxane units of which the organic groups bonded to the silicon atoms are methyl and vinyl groups. It is essential to the invention that the weight proportion of the vinyl groups therein is in the range from 0.1 to 10% or, preferably, from 0.2 to 6% based on the total amount of the methyl and vinyl groups. When the content of the vinyl groups is too small, insufficient improvement can be obtained in the mechanical properties and recoverability from compression of the cured silicone rubber body obtained by curing the composition. When the content of the vinyl groups is too large, on the other hand, the cured silicone rubber body is poor in tensile strength and tear strength, and shows a decrease in heat resistance. The poly(methyl vinyl silsesquioxane) is used in the form of a powder having an average particle diameter in the range from 0.1 to 50 µm. When the average particle diameter of the poly(methyl vinyl silsesquioxane) as the component (b) is too small, difficulties are encountered in compounding as large amount thereof as is desired with the diorganopolysiloxane as the component (a) in addition to a problem of unduly increased hardness of the cured silicone rubber obtained from the composition. When the average particle diameter thereof is too large, on the other hand, insufficient reinforcing effect can be obtained by the incorporation thereof so that the cured silicone rubber body is poor in mechanical properties so as to be unsuitable for use in practical applications.

The poly(methyl vinyl silsesquioxane) as the component (b) can be prepared according to a known method for the preparation of poly(organosilsesquioxanes) in general. Specifically, a mixture of a vinyl trialkoxy silane and a methyl trialkoxy silane or a partial co-hydrolyzate thereof is subjected to a hydrolysis and condensation reaction in an aqueous solution containing a basic substance such as a hydroxide of an alkaline earth element, an alkali metal carbonate ammonia, an amine, and the precipitates are recovered from the aqueous medium followed by drying and pulverization to give the desired finely pulverized particles having the specified average particle diameter.

Alternatively, a methyl trialkoxy silane can by hydrolyzed and partially condensed to give a poly(methyl silsesquioxane) having an amount of silanolic hydroxy groups left uncondensed followed by the reaction of the silanolic hydroxy groups with, for example, vinyl trimethoxy silane, 1,3-divinyl-1,1,3,3-tetramethyl disilazane.

The amount of the poly(methyl vinyl silsesquioxane) as the component (b) compounded with the diorganopolysiloxane as the component (a) is in the range from 1 to 200 parts by weight or, preferably, from 5 to 100 parts by weight per 100 parts by weight of the component (a). When the amount thereof is too small, no substantial improvement can be obtained as desired by the use of this unique component. When the amount thereof is too large, the mechanical properties of the cured silicone rubber bodies tend to be decreased with no further improvement thereby.

The component (c) compounded in the novel heat-curable silicone rubber composition is a curing agent which can be any of conventional curing agents. For example, the curing agent can be an organic peroxide exemplified by benzoyl peroxide, monochlorobenzoyl peroxide, 2,4-dichlorobenzoyl peroxide, 4-methyl benzoyl peroxide, tert-butyl perbenzoate, dicumyl peroxide, 2,5-dimethyl-2,5-di(tert-butylperoxy) hexane, 2,5-dimethyl-2,5-di(tert-butylperoxy) hexane. Two kinds or more of these organic peroxides can be used in combination according to need. The amount of the organic peroxide as the component (c) in the novel composition is in the range from 0.1 to 5 parts by weight per 100 parts by weight of the diorganopolysiloxane as the component (a) in order to fully cure the composition by heating.

When the diorganopolysiloxane as the component (a) contains at least two or, preferably, at least three alkenyl, e.g., vinyl, groups per molecule, alternatively, the curing agent as the component (c) can be a combination of an organohydrogenpolysiloxane as a crosslinking agent pertaining to the crosslinking reaction by the so-called hydrosilation or addition reaction with the alkenyl groups in the component (a) and a platinum compound as a catalyst for promoting the hydrosilation reaction. The organohydrogenpolysiloxane as the crosslinking agent should have at least two or, preferably, at least three hydrogen atoms directly bonded to the silicon atoms in the molecule. The platinum compound as the catalyst is exemplified by chloroplatinic acid, complexes of chloroplatinic acid with an olefin or a vinyl-containing organopolysiloxane and alcoholic solutions of chloroplatinic acid. The amount of the organohydrogenpolysiloxane should be sufficient to provide from 0.8 to 2.5 moles of the silicon-bonded hydrogen atoms per mole of the silicon-bonded alkenyl groups in the component (a). The amount of the platinum compound as the catalyst should be in the range from 1 to 500 ppm by weight or, preferably, from 5 to 200 ppm by weight calculated as platinum based on the amount of the component (a)

More specifically, the organohydrogenpolysiloxane is represented by the average unit formula

R¹_{b}H_{c}SiO_{(4-b-c)/2}, (II)

in which R¹ is an unsubstituted or substituted monovalent hydrocarbon group free from aliphatic unsaturation and the subscripts b and c are each a positive number with the proviso that b+c is in the range from 1.0 to 3.0. The organohydrogenpolysiloxane should preferably have an average degree of polymerization not exceeding 300. The molecular structure thereof can be straight linear, branched or cyclic without particular limitations.

The heat-curable silicone rubber composition of the invention can be prepared by uniformly blending the above described components (a), (b) and (c) each in a specified amount by using a suitable blending machine together with other known additives each in a limited amount according to need. Additives to be added include dispersing aids for the component (b) in the component (a) such as diphenyl silane diol, alkoxy group-containing organosilanes, hexamethyl disilazane, low-viscosity silicone fluids, siliceous fillers such as fumed silica fillers, precipitated silica fillers, diatomaceous earth, finely pulverized quartz powder, other fillers such as iron oxide, titanium dioxide, calcium carbonate, carbon black, coloring agents, i.e. pigments, flame retardant agents, heat-resistance improvers.

The inventive heat-curable silicone rubber composition can be converted into a cured silicone rubber article by shaping the composition into a desired form and heating the same to effect curing. The thus obtained cured silicone rubber body has a unique characteristic of surface non-tackiness and a very low coefficient of friction along with the excellent mechanical properties and good recoverability from compression. Therefore, the silicone rubber composition can be advantageously used as a material for the manufacture of packings in automobiles and other machines, rubber rollers in copying machines or resin laminating machines.

In the following description, the heat-curable silicone rubber composition of the invention is described in more detail by way of examples, in which the term of "parts" always refers to "parts by weight". The properties of the cured silicone rubbers described below for evaluation are the results of the measurements conducted according to the procedures specified in JIS K 6301.

### Example 1 and Comparative Examples 1 and 2.

A mixture of 0.3 part of vinyl trimethoxy silane and 99.7 parts of methyl trimethoxy silane was added dropwise to 400 parts of an ammonia water containing 2% by weight of ammonia to effect co-hydrolysis and co-condensation of the silanes and the precipitates were collected by filtration, washed with water, dried and pulverized into a fine powder of a poly(methyl vinyl silsesquioxane) having an average particle diameter of about 1 µm. The amount of the vinyl groups contained therein was about 0.5% by weight based on the total amount of the methyl and vinyl groups.

A heat-curable silicone rubber composition, referred to as the composition A hereinbelow, was prepared in Example 1 by uniformly blending, on a two-roller mill, 100 parts of a gum-like diorganopolysiloxane having an average degree of polymerization of about 8000 and composed of 99.825% by moles of dimethyl siloxane units of the formula Me₂SiO, 0.15% by moles of methyl vinyl siloxane units of the formula MeViSiO and 0.025% by moles of dimethyl vinyl siloxy units of the formula Me₂ViSiO_{0.5} and 100 parts of the above prepared poly(methyl vinyl silsesquioxane) powder followed by admixing and uniformly dispersing 2 parts of a pasty mixture containing 25% of 2,5-dimethyl-2,5-di(tert-butylperoxy) hexane in a silicone fluid as a curing agent.

The heat-curable silicone rubber composition prepared in the above described manner was then cured into a rubber sheet having a thickness of 2 mm and a test block having a diameter of 29 mm and thickness of 12.7 ± 0.13 mm by compression-molding at 165 °C for 10 minutes under a compressive force of 30 kg/cm² followed by post-curing at 200 °C for 4 hours. These test specimens were subjected to measurement of mechanical properties to give the results shown in Table 1 below, from which it was concluded that the cured silicone rubber body had mechanical strength sufficient for use in practical applications with an outstandingly small permanent compression set. The values of the permanent compression set given in Table 1 were determined after 22 hours under 25% compression at 180 °C.

For comparison, another heat-curable silicone rubber composition, referred to as composition B hereinbelow, was prepared in Comparative Example 1 in substantially the same manner as in Example 1 except replacing the poly(methyl vinyl silsesquioxane) powder with the same amount of a poly(methyl silsesquioxane) powder prepared in the same manner as the preparation of the former by using methyl trimethoxy silane alone as the starting organosilane compound. The results of the evaluation tests of the cured silicone rubber specimens made therefrom are shown also in Table 1.

For further comparison, another heat-curable silicone rubber composition, referred to as composition C hereinbelow, was prepared in Comparative Example 2 in substantially the same manner as in Example 1 except replacing the poly(methyl vinyl silsesquioxane) powder with the same amount of a finely pulverized quartz powder having an average particle diameter of 0.8 µm (Crystallite 5X, a product by Tatsumori Co.). The results of the evaluation tests of the cured silicone rubber specimens made therefrom are shown also in Table 1.

**Table 1**

| | | | |
|---|---|---|---|
| Composition No. | A | B | C |
| Hardness, JIS A | 55 | 52 | 47 |
| Tensile strength, kgf/cm² | 42 | 28 | 47 |
| Ultimate elongation, % | 190 | 220 | 300 |
| Permanent compression set, % | 2.5 | 6.3 | 4.3 |
| Impact resilience, % | 73 | 70 | 72 |

### Examples 2 and 3 and Comparative Examples 3 and 4.

Another poly(methyl vinyl silsesquioxane) powder having an average particle diameter of about 1 µm, of which the content of vinyl groups was 1.0% by weight based on the total amount of the methyl and vinyl groups, was prepared in substantially the same manner as the preparation of the poly(methyl vinyl silsesquioxane) powder in Example 1 by using the two organosilane compounds as the starting materials in a modified proportion.

A base compound was prepared by uniformly blending, in a kneader, 100 parts of a gum-like diorganopolysiloxane having an average degree of polymerization of about 8000 and composed of 99.575% by moles of dimethyl siloxane units, 0.40% by moles of methyl vinyl siloxane units and 0.025% by moles of trimethyl siloxy units, 10 parts of a dimethylpolysiloxane fluid having a degree of polymerization of 10 terminated at the molecular chain ends with silanol groups, 3 parts of 1,3-divinyl-1,1,3,3-tetramethyl disilazane and 30 parts of a finely divided silica filler having a specific surface area of 130 m²/g and hydrophobilized on the surface by blocking with Me₂SiO units and the base compound was heated at 160 °C for 2 hours to effect aging.

Two heat-curable silicone rubber compositions, referred to as the compositions D and E hereinbelow, were prepared in Examples 2 and 3, respectively, by uniformly blending, on a two-roller mill, 100 parts of the above prepared base compound and 25 parts (Example 2) or 50 parts (Example 3) of the above prepared poly(methyl vinyl silsesquioxane) powder followed by further admixture of 2 parts of a pasty mixture containing 25% of 2,5-dimethyl-2,5-di(tert-butylperoxy) hexane in a silicone oil as a curing agent.

These heat-curable silicone rubber compositions D and E were each subjected to curing and evaluation tests in the same manner as in Example 1 to give the results shown in Table 2 below. As is clear from the results, these cured silicone rubbers each had high-grade characteristics with a low coefficient of friction and excellent performance in stretching fatigue and resistance against antifreeze fluid.

For comparison, two more heat-curable silicone rubber compositions, referred to as compositions F and G, were prepared in Comparative Examples 3 and 4, respectively, in substantially the same manner as in Examples 2 and 3 described above except replacing the poly(methyl vinyl silsesquioxane) powder with 40 parts of the same poly(methyl silsesquioxane) powder as used in Comparative Example 1 or with 60 parts of the same finely pulverized quartz powder as used in Comparative Example 2. The results of the curing and evaluation tests of these comparative compositions are also shown in Table 2 below.

**Table 2**

| | | | | |
|---|---|---|---|---|
| Composition No. | D | E | F | G |
| Hardness, JIS A | 68 | 70 | 69 | 68 |
| Tensile strength, kgf/cm² | 83 | 84 | 73 | 80 |
| Ultimate elongation, % | 145 | 125 | 160 | 110 |
| Tear strength, JIS B, kgf/cm | 18 | 18 | 14 | 12 |
| Permanent compression set *¹, % | 5.0 | 4.2 | 9.0 | 4.4 |
| Coefficient of friction | 0.56 | 0.54 | 0.64 | 0.70 |
| 80% Stretching fatigue *², 10³ times | >1200 | >1200 | 1200 | 200 to 600 |
| Permanent compression set in antifreeze fluid *³, % | 60 | 55 | 74 | 60 |

| | | | | |
|---|---|---|---|---|
| *1 Permanent compression set: after 70 hours under 25% compression at 180 °C | | | | |
| *2 Stretching fatigue: de Mattia fatigue testing machine, #3 dumbbell specimen | | | | |
| *3 Permanent compression set in antifreeze fluid: after 70 hours under 25% compression in LLC antifreeze fluid at 175 °C | | | | |

## Claims

1. A heat-curable silicone rubber composition which comprises, as a blend:
(a) 100 parts by weight of a diorganopolysiloxane represented by the average unit formula
RₐSiO_{(4-a)/2},
in which R is an unsubstituted or substituted monovalent hydrocarbon group and the subscript a is a positive number in the range from 1.95 to 2.05, and having an average degree of polymerization in the range from 100 to 10,000;
(b) from 1 to 200 parts by weight of a poly(methyl vinyl silsesquioxane) consisting essentially of trifunctional organosiloxane units of which the organic groups bonded to the silicon atoms are methyl and vinyl groups, the weight proportion of the vinyl groups being in the range from 0.1 to 10% based on the total amount of the vinyl and methyl groups therein, in the form of a powder having an average particle diameter in the range from 0.1 to 50 µm; and
(c) a curing agent in an amount sufficient to cure the composition by heating.

2. A heat-curable silicone rubber composition as claimed in claim 1 wherein the weight proportion of the vinyl groups in the poly(methyl vinyl silsesquioxane) is in the range from 0.2 to 6% by weight based on the total amount of the methyl and vinyl groups therein.

3. A heat-curable silicone rubber composition as claimed in claim 1 or claim 2 wherein the amount of the poly(methyl vinyl silsesquioxane) as the component (b) is in the range from 5 to 100 parts by weight per 100 parts by weight of the component (a).

4. A heat-curable silicone rubber composition as claimed in any one of the preceding claims wherein the curing agent is an organic peroxide.

5. A heat-curable silicone rubber composition as claimed in claim 4 wherein the amount of the organic peroxide as the curing agent is in the range from 0.1 to 5 parts by weight per 100 parts by weight of the component (a)

6. A cured silicone rubber article obtained by shaping and heating a heat-curable silicone rubber composition as claimed in any one of the preceding claims.

## Patentansprüche

1. Wärmehärtbare Silikonkautschukzusammensetzung, umfassend als Mischung:
a) 100 Gew.-Teile eines Diorganopolysiloxans der Formel für die durchschnittliche Einheit
RₐSiO_{(4-a)/2},
in der R für eine nichtsubstituierte oder substituierte einwertige Kohlenwasserstoffgruppe steht und der tiefgestellte Index a eine positive Zahl im Bereich von 1,95 bis 2,05 bedeutet, das einen durchschnittlichen Polymerisationsgrad im Bereich von 100 bis 10.000 aufweist,
(b) 1 bis 200 Gew.-Teile eines Poly(methylvinylsilsesquioxans) im wesentlichen aus trifunktionellen Organosiloxaneinheiten, deren an die Siliciumatome gebundenen organischen Gruppen aus Methyl- und Vinylgruppen bestehen, wobei der Gew.-Anteil an den Vinylgruppen im Bereich von 0,1 bis 10%, bezogen auf die Gesamtmenge an den Vinyl- und Methylgruppen darin, liegt, in Form eines Pulvers mit einem durchschnittlichen Teilchendurchmesser im Bereich von 0,1 bis 50 µm und
(c) ein Härtungsmittel in einer zur Härtung der Zusammensetzung durch Erwärmen ausreichenden Menge.

2. Wärmehärtbare Silikonkautschukzusammensetzung nach Anspruch 1, wobei der Gew.-Anteil an den Vinylgruppen in dem Poly(methylvinylsilsesquioxan) im Bereich 0,2 bis 6 Gew.-%, bezogen auf die Gesamtmenge an den Methyl- und Vinylgruppen darin, liegt.

3. Wärmehärtbare Silikonkautschukzusammensetzung nach Anspruch 1 oder Anspruch 2, wobei die Menge an dem Poly(methylvinylsilsesquioxan) als der Komponente (b) im Bereich von 5 bis 100 Gew.-Teilen pro 100 Gew.-Teile der Komponente (a) liegt.

4. Wärmehärtbare Silikonkautschukzusammensetzung nach einem der vorhergehenden Ansprüche, wobei das Härtungsmittel aus einem organischen Peroxid besteht.

5. Wärmehärtbare Silikonkautschukzusammensetzung nach Anspruch 4, wobei die Menge an dem organischen Peroxid als dem Härtungsmittel im Bereich von 0,1 bis 5 Gew.-Teilen pro 100 Gew.-Teile der Komponente (a) liegt.

6. Gehärteter Silikonkautschukgegenstand, erhalten durch Ausformen und Erwärmen einer wärmehärtbaren Silikonkautschukzusammensetzung nach einem der vorgehenden Ansprüche.

## Revendications

1. Composition de caoutchouc au silicone thermodurcissable qui comprend, en tant que mélange :
(a) 100 parties en poids d'un diorganopolyxiloxane représenté par la formule de motif moyen
RₐSiO_{(4-a)/2},
dans laquelle R est un groupe hydrocarbone monovalent, substitué ou non substitué, et l'indice a est un nombre positif dans la gamme de 1,95 à 2,05, et ayant un degré moyen de polymérisation dans la gamme de 100 à 10 000 ;
(b) 1 à 200 parties en poids d'un poly(méthylvinyle silsesquioxane) constitué essentiellement de motifs organosiloxane trifonctionnels dont les groupes organiques liés aux atomes de silicium sont des groupes méthyle et vinyle, la proportion pondérale des groupes vinyle se situant dans la gamme de 0,1 à 10 % en se basant sur la quantité totale des groupes vinyle et méthyle présents, sous la forme d'une poudre présentant un diamètre moyen des particules dans la gamme de 0,1 à 50 µm ; et
(c) un agent durcissant en une quantité suffisante pour durcir la composition par chauffage.

2. Composition de caoutchouc au silicone thermo-durcissable selon la revendication 1, dans laquelle la proportion pondérale des groupes vinyle dans le poly(méthylvinyle silsesquioxane) se situe dans la gamme de 0,2 à 6 % en poids en se basant sur la quantité totale de groupes méthyle et vinyle présents.

3. Composition de caoutchouc au silicone thermo-durcissable selon la revendication 1 ou 2, dans laquelle la quantité de poly(méthylvinyle silsesquioxane) en tant que composant (b) se situe dans la gamme de 5 à 100 parties en poids pour 100 parties en poids de composant (a).

4. Composition de caoutchouc au silicone thermo-durcissable selon l'une quelconque des revendications précédentes, dans laquelle l'agent de durcissement est un péroxide organique.

5. Composition de caoutchouc au silicone thermo-durcissable selon la revendication 4, dans laquelle la quantité de péroxide organique en tant qu'agent durcissant, se situe dans la gamme de 0,1 à 5 parties en poids pour 100 parties en poids du composant (a).

6. Article de caoutchouc au au silicone durci, obtenu en mettant en forme et en chauffant une composition de caoutchouc au silicone thermo-durcissable selon l'une quelconque des revendications précédentes.
